# FASCICULE DE BREVET EUROPEEN

(11) **EP 0 703 115 B1**
(45) Date de publication et mention de la délivrance du brevet: **14.01.1998**
(21) Numéro de dépôt: 95402147.3
(22) Date de dépôt: 25.09.1995
(51) Int. Cl.: B60P 1/28, B60P 3/22

(54) **Dispositif de protection de benne**
Schutzvorrichtung für Kipper
Protector for tipper body

(30) Priorité: 26.09.1994 FR 9411698
(43) Date de publication de la demande: 27.03.1996
(73) Titulaire: Mangeard, Philippe, 06000 Nice (FR)
(72) Inventeur: Mangeard, Philippe, 06000 Nice (FR)
(74) Mandataire: Hautier, Jean-Louis

(56) Documents cités:
- EP-A- 0 374 336
- DE-A- 3 116 091
- FR-A- 1 246 867
- FR-A- 1 510 065
- GB-A- 1 512 511

## Description

L'invention a pour objet un dispositif de protection de benne.

Actuellement, de nombreux camions à benne basculante, camions porteurs ou semi-bennes ont un corps de benne composé d'un fond plat et de parois latérales perpendiculaires au fond.

Ces bennes sont nécessairement renforcées aussi bien au niveau du fond que des parois latérales par des nervures, des traverses, des renforts ou des raidisseurs latéraux ou longitudinaux.

Ces bennes classiques sont généralement en aluminium ou en acier non renforcé. Il s'agit d'acier classique.

Elles ne sont donc pas utilisables pour le transport de quartiers de roche ou rochers ou autres matériaux analogues qui sont agressifs et/ou abrasifs pour la benne.

Actuellement, il existe une solution pour utiliser ces bennes pour le transport d'enrochement ou de matériaux abrasifs, c'est de mettre en place un revêtement de plaques de caoutchouc très épais en protection latérale et en protection de fond de la benne.

Cette protection est peu efficace, elle est difficile à mettre en place et à fixer, elle gêne l'écoulement des produits lors du relevage de la benne et entraîne inéluctablement la détérioration du dispositif de protection.

L'état de la technique peut être défini par le brevet suivant :
- *EP-B1 0 374 336 : ce brevet décrit un véhicule de type à* *benne, comportant un caisson basculant d'avant en arrière et reposant à l'arrêt dans un berceau de support fixe sur le châssis du véhicule, caractérisé en ce que ledit caisson et ledit berceau sont constitués par des volumes à sections transversales concentriques de manière que ledit caisson s'encastre dans ledit berceau, ledit caisson a une surface inférieure convexe vers le bas dans un plan vertical parallèle à l'axe horizontal transversal de basculement dudit caisson, ledit berceau ayant une surface supérieure concave vers le haut dans ledit plan vertical, lesdites surfaces inférieures convexes et supérieures concaves sont encastrées l'une dans l'autre lorsque ledit caisson est dans sa position la plus basse, de telle sorte que la partie inférieure dudit caisson est encastrée dans ledit berceau.*

Le véhicule de type à benne, décrit dans ce brevet, permet de réaliser une benne à multi-usages pour les travaux publics (graviers, pierres, blocs à enrochement, gravats, boues, enrobés, etc.

Cette benne transporte tout en tout confort et en sécurité.

L'invention tend à résoudre les problèmes des bennes actuelles qui sont généralement en aluminium ou acier ordinaire et donc fragiles, en utilisant un dispositif protecteur qui combine les caractéristiques techniques d'une benne EP B1 0 374 336 en les adaptant pour que celles-ci puissent être mises en place sur une benne classique.

Dispositif de protection de benne contre les produits agressifs et/ou blocs de roche pour enrochement, pour véhicule de type à benne du type, comportant une benne basculante classique composée d'un fond et de parois latérales perpendiculaires, ledit dispositif est caractérisé par le fait que le fond de ladite benne reçoit un faux-châssis ou berceau destiné à recevoir un caisson dont la forme correspond à la section du faux-châssis ou berceau de manière à permettre un encastrement de l'un dans l'autre partiellement ou en totalité, ledit caisson et le faux-châssis ou berceau ayant des dimensions adaptées à la taille de la benne à protéger.

Selon un mode de réalisation préféré, l'encastrement du caisson et du berceau ou faux-châssis s'effectue essentiellement au niveau du fond du caisson et en partie sur ses bords latéraux.

Le caisson et le berceau ou faux-châssis sont constitués par des volumes à sections transversales concentriques de manière que ledit caisson s'encastre dans ledit berceau ou faux-châssis, ledit caisson a une surface inférieure convexe vers le bas dans un plan vertical parallèle à l'axe horizontal transversal de basculement dudit caisson, ledit faux-châssis ou berceau ayant une surface supérieure concave vers le haut dans ledit plan vertical, lesdites surfaces inférieures convexes et supérieures concaves sont encastrées l'une dans l'autre lorsque ledit caisson est dans sa position la plus basse, de telle sorte que la partie inférieure dudit caisson est encastrée dans ledit berceau ou faux-châssis

Le faux-châssis ou berceau repose sur des sabots longitudinaux.

Lesdits sabots longitudinaux ont un entraxe qui est identique à l'entraxe des deux longerons du châssis du véhicule.

Un espace est déterminé entre le faux-châssis ou berceau et le fond de la benne et ce, en vue d'absorber les chocs en souplesse sans jamais que le caisson et/ou le berceau ou faux-châssis touche le fond de la benne classique.

Selon un mode de réalisation préféré, l'espace est d'environ 40 mm.

Le caisson est réalisé en acier très supérieur tel que par exemple celui produit par la société CREUSOT LOIRE INDUSTRIE sous la dénomination "CREUSABRO 5000" (marque déposée), dont la résistance à l'abrasion est de huit fois supérieure à celle des aciers E32 actuellement utilisés pour le même usage. La résistance aux chocs et l'élasticité sont de très haut niveau.

Compte tenu des propriétés mécaniques de cette qualité d'acier, il devient alors possible d'utiliser des épaisseurs de tôle beaucoup plus faibles, donc conduisant à un matériel lui-même beaucoup plus léger.

Dans cet ordre d'idée, l'invention trouve par exemple, une application particulièrement avantageuse dans la construction des protections de bennes, par exemple pour l'enrochement. En effet, le caisson épousant alors exactement la forme du berceau ou faux-châssis avec un très faible écartement, les épaisseurs de leurs parois respectives s'ajoutent, ce qui augmente la résistance de ce matériel aux chocs des rochers au chargement.

Les deux feuilles métalliques (caisson, faux-châssis ou berceau) augmentent la limite élastique du fond du dispositif protecteur.

Des moyens de fixation connus (boulons, écrous, vis, serre-joints) fixent le berceau ou faux-châssis dans la benne.

Des moyens de fixation connus fixent les parois du caisson aux parois de la benne classique.

La forme du caisson et/ou du berceau ou faux-châssis est obtenue par cintrage ou par pliage conférant ainsi une section polygonale, arrondie ou circulaire.

La forme du caisson et/ou du berceau ou faux-châssis est obtenue par soudure des différentes plaques formant le volume polygonal.

Lesdites sections transversales sont circulaires, le caisson consistant en un volume cylindrique d'ouverture comprise entre 90° et 360° et le berceau ou faux-châssis consistant en un volume cylindrique d'ouverture comprise entre 45° et 180°.

Lesdites sections transversales sont en forme de polygones réguliers à même nombre de côtés.

Lesdites sections transversales sont en forme de polygones non réguliers dont le nombre et la dimension des côtés se correspondent entre le caisson et le berceau ou faux-châssis de manière à assurer un encastrement.

Lesdites sections transversales sont circulaires.

Le caisson et le berceau ou faux-châssis ont une section transversale curviligne.

Le caisson et le berceau ou faux-châssis ont une section circulaire.

Le berceau ou faux-châssis est adapté à autoriser l'encastrement de tous les caissons à flancs convergents.

Selon un mode de réalisation, les extrémités supérieures du caisson se terminent par un profil qui épouse la cornière formée au niveau de l'extrémité des parois latérales de la benne classique.

Ledit dispositif protecteur est fixé directement sur les longerons du châssis dudit véhicule et ce en remplacement intégral de la benne classique.

Le caisson dudit dispositif protecteur dépasse en longueur de la benne classique et ce, de manière à pouvoir loger le renfort de caisse arrière et éventuellement une porte adaptée aux produits à transporter.

Les dessins ci-joints sont donnés à titre d'exemples indicatifs et non limitatifs. Ils représentent un mode de réalisation préféré selon l'invention. Ils permettront de comprendre aisément l'invention.

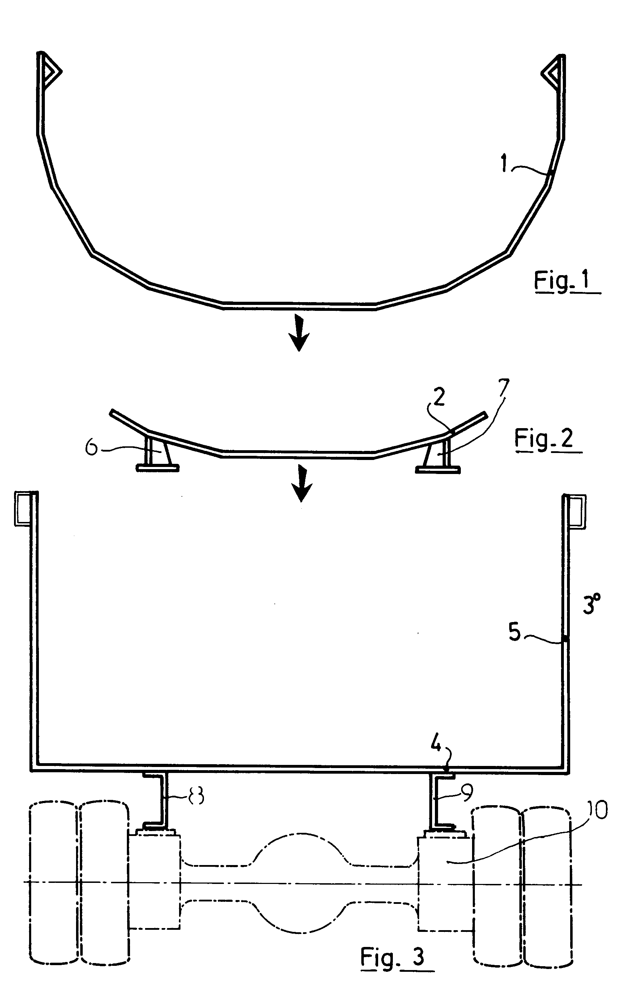

La figure 1 est une vue du caisson de la nouvelle benne qui va former le dispositif protecteur de la benne classique.

La figure 2 est une vue en coupe transversale du berceau ou faux-châssis.

La figure 3 est une vue schématique vue en coupe transversale d'une benne classique et de son châssis.

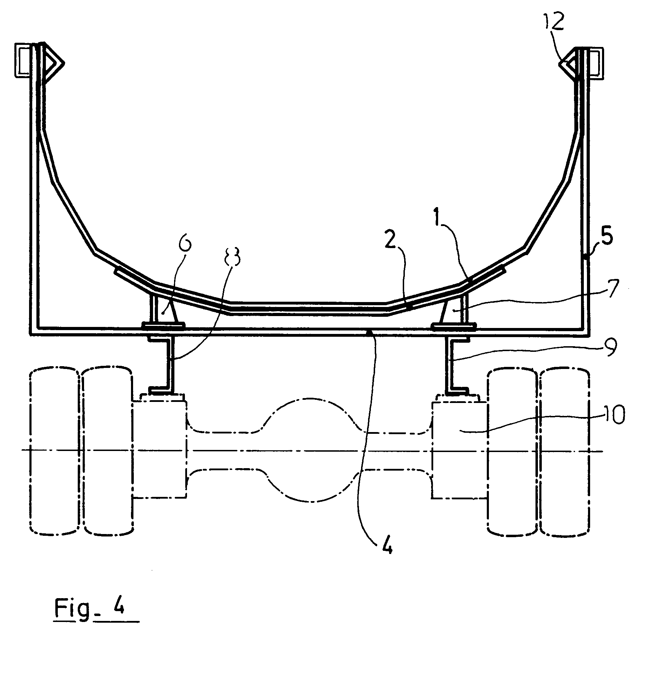

La figure 4 est une vue en coupe du dispositif protecteur mis en place dans la benne classique.

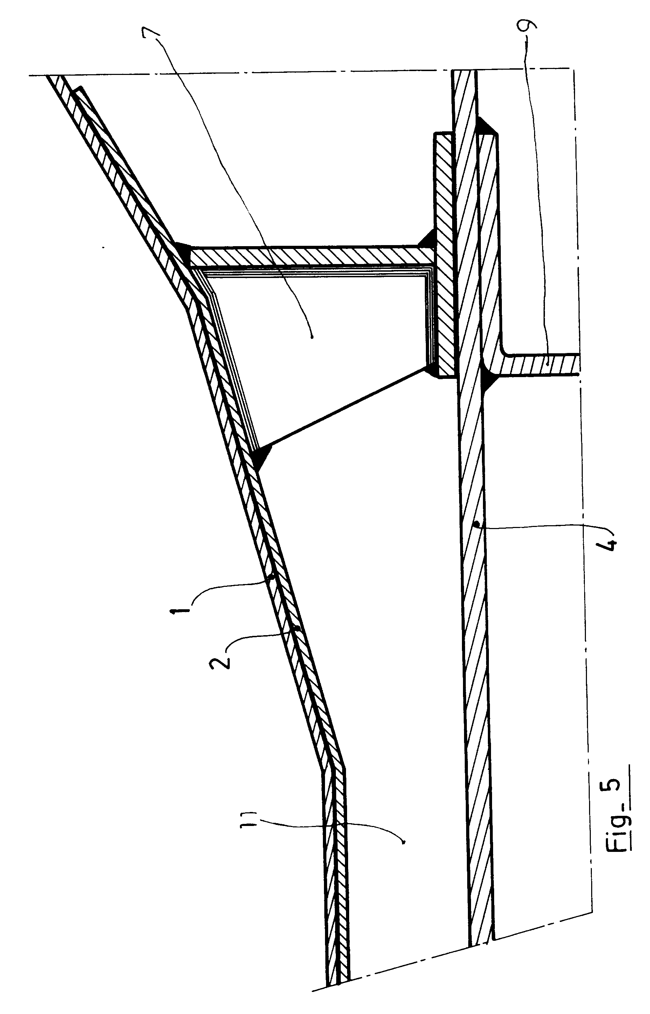

La figure 5 est une vue schématique d'un des systèmes de repos du faux-châssis ou berceau sur le fond de la benne classique, à la verticale des longerons du châssis.

La figure 6 est une vue de côté de la benne et de son dispositif protecteur. Il met en évidence le fait que le caisson du dispositif protecteur dépasse en longueur de la benne classique et ce, de manière à pouvoir loger le renfort de caisse arrière et éventuellement une porte.

La figure 7 est une vue schématique d'un châssis de benne sur lequel est monté le dispositif protecteur de benne qui fait office de benne, la benne classique ayant été déposée.

Le dispositif protecteur selon l'invention est composé d'un caisson 1 et d'un faux-châssis 2 ou berceau.

Ce dispositif est destiné à s'adapter à une benne classique 3.

Cette benne classique 3 est composée d'un fond 4 et de parois latérales 5.

Le fond 4 de ladite benne classique 3 reçoit un faux-châssis 2 ou berceau destiné à recevoir un caisson 1 dont la forme correspond à la section du faux-châssis ou berceau 2 de manière à venir s'encastrer en partie par le fond dudit caisson 1 dans ledit faux-châssis ou berceau 2.

L'encastrement du profil ou section du caisson 1 sur le profil ou section du faux-châssis ou berceau 2 s'effectue essentiellement au niveau du fond du caisson 1 et en partie sur ses parois latérales.

Dans le mode de représentation présenté sur les figures, le caisson 1 et le berceau ou faux-châssis 2 ont une section transversale curviligne.

Le caisson 1 est à flanc convergent.

La forme curviligne est obtenue par de multiples sections transversales en forme de polygone, le faux-châssis ou berceau 2 a un profil qui correspond à la même section transversale que le caisson 1 de manière à permettre l'encastrement du fond dudit caisson 1 dans le faux-châssis ou berceau 2.

Le faux-châssis ou berceau 2 repose sur des sabots longitudinaux 6, 7.

Ces sabots 6, 7 ont un entraxe qui est identique à l'entraxe des deux longerons 8, 9 du châssis 10 du véhicule.

Un espace 11 est déterminé entre le faux-châssis ou berceau 2 et le fond 4 de la benne classique 3.

Cet espace 11 permet d'absorber les chocs en souplesse sans jamais que le caisson 1 et/ou le faux-châssis ou berceau 2 touche le fond 4 de la benne classique 3.

Dans le mode de réalisation représenté et avec les matériaux préconisés, l'espace 11 peut être d'environ 40 mm pour un entraxe de 1300 mm entre les deux longerons 8, 9 et les deux sabots 6, 7.

L'extrémité libre des parois latérales du caisson peut se terminer par une cornière 12.

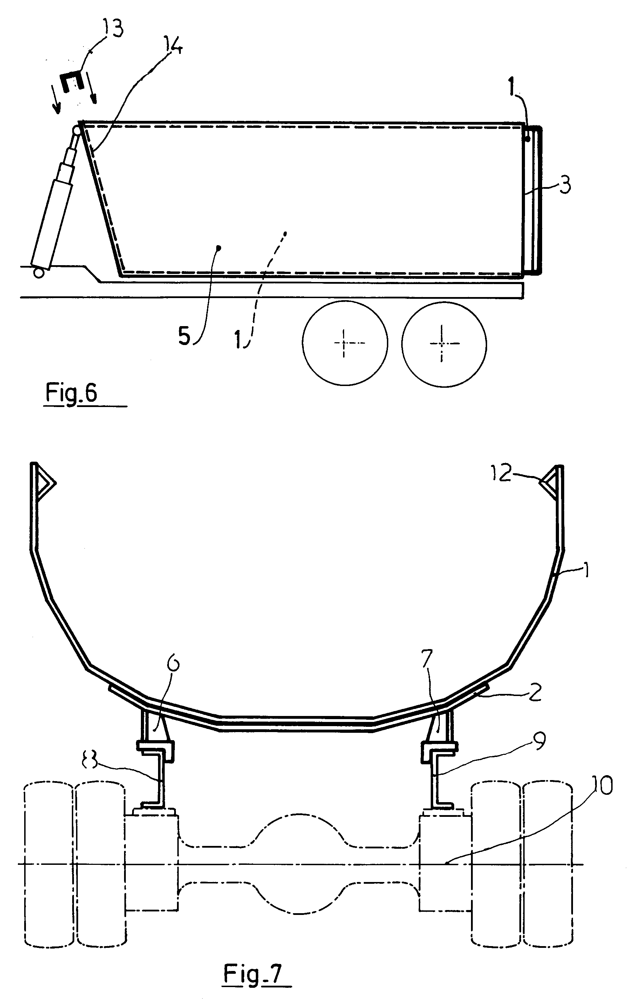

La figure 6 met en évidence un autre mode de réalisation dans lequel le caisson 1 déborde en longueur, vers l'arrière du véhicule, de la benne classique 3.

Ce débordement permet de mettre en place un renfort de caisson et/ou une porte adaptée aux produits destinés à la benne.

Cette figure 6 met également en évidence un des moyens de fixation 13 qui peut être un fer en U qui vient bloquer et fixer entre eux la benne classique 3 et le caisson 1.

Ce fer en U, qui fait office de moyen de fixation, est disposé au niveau de la partie avant de la benne classique 3 et du hayon avant 14 du caisson 1.

Le fer en U maintient ainsi solidaires la benne classique 3 et le caisson 1.

Dans le cas où la benne classique 3 est détériorée, il peut être envisagé d'utiliser le dispositif protecteur de benne comme benne, ledit dispositif est alors directement fixé sur les longerons du châssis du véhicule (voir la figure 7).

### REFERENCES

- 1.: Caisson
- 2.: Faux-châssis ou berceau
- 3.: Benne classique
- 4.: Fond
- 5.: Parois latérales
- 6, 7.: Sabots
- 8, 9.: Longerons
- 10.: Châssis
- 11.: Espace
- 12.: Cornière
- 13.: Moyens de fixation
- 14.: Hayon avant du caisson

## Revendications

1. Dispositif de protection de benne pour véhicule de type à benne du type comportant une benne basculante classique (3) composée d'un fond (4) et de parois latérales perpendiculaires (5), caractérisé par le fait
que le fond (4) de ladite benne (3) reçoit un faux-châssis ou berceau (2) destiné à recevoir un caisson (1) dont la forme correspond à la section du faux-châssis ou berceau (2) de manière à permettre un encastrement de l'un dans l'autre partiellement ou en totalité, ledit caisson (1) et le faux-châssis ou berceau (2) ayant des dimensions adaptées à la taille de la benne à protéger.

2. Dispositif selon la revendication 1 caractérisé par le fait
que l'encastrement du caisson (1) et du berceau ou faux-châssis (2) s'effectue essentiellement au niveau du fond du caisson (1) et en partie sur ses bords latéraux.

3. Dispositif selon la revendication 1 caractérisé par le fait
que le caisson (1) et le berceau ou faux-châssis (2) sont constitués par des volumes à sections transversales concentriques de manière que ledit caisson (1) s'encastre dans ledit berceau ou faux-châssis (2), ledit caisson (1) a une surface inférieure convexe vers le bas dans un plan vertical parallèle à l'axe horizontal transversal de basculement dudit caisson, ledit berceau ou faux-châssis (2) ayant une surface supérieure concave vers le haut dans ledit plan vertical, lesdites surfaces inférieures convexes et supérieures concaves sont encastrées l'une dans l'autre lorsque ledit caisson (1) est dans sa position la plus basse, de telle sorte que la partie inférieure dudit caisson (1) est encastrée dans ledit berceau.

4. Dispositif selon la revendication 1 caractérisé par le fait
que le faux-châssis ou berceau (2) repose sur des sabots longitudinaux (6, 7).

5. Dispositif selon la revendication 4 caractérisé par le fait
que lesdits sabots longitudinaux (6, 7) ont un entraxe qui est identique à l'entraxe des deux longerons (8, 9) du châssis du véhicule.

6. Dispositif selon la revendication 1 caractérisé par le fait
qu'un espace (11) est déterminé entre le faux-châssis ou berceau (2) et le fond (4) de la benne (3) et ce, en vue d'absorber les chocs en souplesse sans jamais que le caisson (1) et/ou le berceau ou faux-châssis (2) touche le fond (4) de la benne classique (3).

7. Dispositif selon la revendication 1 caractérisé par le fait
que le caisson (1) est réalisé en acier très supérieur tel que par exemple celui produit par la société CREUSOT LOIRE INDUSTRIE sous la dénomination "CREUSABRO 5000" (marque déposée).

8. Dispositif selon la revendication 1 caractérisé par le fait
que des moyens de fixation connus (boulons, écrous, vis, serre-joints) fixent le berceau ou faux-châssis (2) au fond (4) de la benne (3) ; des moyens de fixation (13) connus fixent les parois du caisson (1) aux parois de la benne classique (3).

9. Dispositif selon la revendication 1 caractérisé par le fait
que la forme du caisson (1) et/ou du berceau ou faux-châssis (2) est obtenue par cintrage ou pliage conférant ainsi une section polygonale, arrondie ou circulaire.

10. Dispositif selon la revendication 1 caractérisé par le fait
que la forme du caisson (1) et/ou du berceau ou faux-châssis (2) est obtenue par soudure des différentes plaques formant le volume polygonal.

11. Dispositif selon la revendication 1 caractérisé par le fait
que les extrémités supérieures du caisson (1) se terminent par un profil qui épouse la cornière (12) formée au niveau de l'extrémité des parois latérales (5) de la benne classique (3).

12. Dispositif selon la revendication 1 caractérisé par le fait
que le caisson (1) dudit dispositif protecteur dépasse en longueur de la benne classique (3) et ce, de manière à pouvoir loger le renfort de caisse arrière et éventuellement une porte adaptée aux produits à transporter.

## Claims

1. System of vehicle tipping wagon protection applicable to wagons equipped with a conventional tipping wagon (3) comprising a bottom (4) and perpendicular side walls (5) characterized in that the bottom (4) of the said wagon (3) receives an underframe or cradle (2) itself designed to receive a box-like structure (1), the shape of which matches the section of the underframe or cradle (2) so as to allow one to be partly or entirely inserted in the other, the said box-like structure (1) and the underframe or cradle (2) having dimensions adapted to the size of the wagon to be protected.

2. A system according to claim 1 characterized in that the insertion of the box-like structure (1) in the cradle or underframe (2) takes place essentially at the level of the box-like structure bottom (1) and partly on its side walls.

3. System according to claim 1 characterized in that the box-like structure (1) and the cradle or underframe (2) constitute volumes with concentric cross-sections so that the said box-like structure (1) is inserted in the said cradle or underframe (2), the said box-like structure (1) having a convex surface which is smaller towards the bottom when viewed in a vertical plane parallel to the transversal horizontal tipping axis of the said box-like structure, the said cradle or underframe (2) having an upper concave surface towards the top in the said vertical plane, the said lower convex and upper concave surfaces being fitted one in the other when the said box-like structure (1) is in its lowest position so that the lower part of the said box-like structure (1) fits into the said cradle.

4. System according to claim 1 characterized in that the underframe or cradle (2) stands on longitudinal skates (6, 7).

5. System according to claim 4 characterized in that the said longitudinal skates (6, 7) have a spacing which is identical to the spacing between the two beams (8, 9) of the vehicle chassis.

6. System according to claim 1 characterized in that a space (11) is established between the underframe or cradle (2) and the bottom (4) of the wagon (3) with a view to flexibly absorb impacts without the box-like structure (1) and/or underframe or cradle (2) touching the bottom of the conventional wagon (3) bottom (4).

7. System according to claim 1 characterized in that the box-like structure (1) is executed in a superior grade steel such as for instance that produced by the company CREUSOT-LOIRE INDUSTRIE, with the denomination "CREUSABRO 5000" (protected brand name).

8. System according to claim 1 characterized in that known fixing means (bolts, nuts, screws, clamps) secure the cradle or the underframe (2) to the bottom (4) of the wagon (3); known fixing means (13) secure the wall of the box-like structure (1) to the wall of the conventional wagon (3).

9. System according to claim 1 characterized in that the shape of the box-like structure (1) and/or cradle or underframe (2) is obtained by bending or folding, thereby generating a polygonal, rounded or circular section.

10. System according to claim 1 characterized in that the shape of the box-like structure (1) and/or cradle or underframe (2) is obtained by welding different plates forming the polygonal volume.

11. System according to claim 1 characterized in that the upper ends of the box-like structure (1) terminate in a section which mates the angle (12) formed at the end of the side wall (5) of the conventional wagon (3).

12. System according to claim 1 characterized in that the box-like structure (1) of the said protection system exceeds in length the conventional wagon (3) and this so as to be able to house the rear stiffener and if necessary a door adapted to the products to be transported.

## Patentansprüche

1. Schutzvorrichtung für Ladekästen auf Fahrzeugen mit Ladekasten des Typs mit klassischem kippbaren Ladekasten (3), bestehend aus einem Boden (4) und senkrechten Seitenwänden (5), dadurch gekennzeichnet, daß der Boden (4) des besagten kippbaren Ladekastens (3) einen Zwischenrahmen bzw. Aufsatz (2) aufnimmt, dazu bestimmt einen Senkkasten (1) zu tragen, dessen Form der Sektion des Zwischenrahmens bzw. Aufsatzes (2) entspricht und damit einen teilweisen oder völligen Einbau des einen in den anderen ermöglicht, wobei der besagte Senkkasten (1) und der Zwischenrahmen bzw. Aufsatz (2) an die Größe des zu schützenden Ladekastens angepaßte Abmessungen haben.

2. Vorrichtung gemäß Anspruch 1, dadurch gekennzeichnet, daß der Einbau des Senkkastens (1) und des Zwischenrahmens bzw. Aufsatzes (2) im wesentlichen auf Bodenebene des Senkkastens (1) und zum Teil auf seinen seitlichen Rändern erfolgt.

3. Vorrichtung gemäß Anspruch 1, dadurch gekennzeichnet, daß der Senkkasten (1) und der Zwischenrahmen bzw. Aufsatz (2) aus Volumen mit konzentrischen Querschnitten bestehen auf die Weise, daß sich der besagte Senkkasten (1) auf den besagten Aufsatz bzw. Zwischenrahmen (2) fügt, wobei der besagte Senkkasten (1) eine nach unten konvexe untere Fläche in einer vertikalen Ebene parallel zur horizontalen Querachse des Kippvorgangs des besagten Kastens, und der besagte Aufsatz bzw. Zwischenrahmen (2) eine in der besagten vertikalen Ebene nach oben konkave obere Fläche aufweist; die besagten untere konvexe und obere konkave Flächen sind eine in die andere einfügen, wenn der Senkkasten (1) in seiner tiefsten Position ist, so daß der untere Teil des besagten Senkkasten (1) auf dem besagten Aufsatz aufliegt.

4. Vorrichtung gemäß Anspruch 1, dadurch gekennzeichnet, daß der Zwischenrahmen bzw. Aufsatz (2) auf den Längs-Stützschuhen (6, 7) ruht.

5. Vorrichtung gemäß Anspruch 4, dadurch gekennzeichnet, daß die Längs-Stützschuhe (6, 7) einen Mittenabstand gleich dem Mittenabstand der beiden Längsträger (8, 9) des Fahrzeugchassis haben.

6. Vorrichtung gemäß Anspruch 1, dadurch gekennzeichnet, daß ein Raum (11) zwischen dem Zwischenrahmen bzw. Aufsatz (2) und dem Boden (4) des Ladekastens (3) vorgesehen ist mit dem Zweck Schocks weich abzufangen, ohne daß der Senkkasten (1) und/oder der Aufsatz bzw. Zwischenrahmen (2) den Boden (4) des klassischen Ladekastens (3) berührt.

7. Vorrichtung gemäß Anspruch 1, dadurch gekennzeichnet, daß der Senkkasten (1) aus Hochgüte-Stahl, wie zum Beispiel dem unter der Bezeichnung "CREUSABRO 5000" (eingetragenes Warenzeichen) von der Firma CREUSOT LOIRE INDUSTRIE produzierten Stahl, hergestellt ist.

8. Vorrichtung gemäß Anspruch 1, dadurch gekennzeichnet, daß der Aufsatz bzw. Zwischenrahmen (2) am Boden (4) des Ladekastens (3) mit bekannten Befestigungsmitteln (Bolzen, Muttern, Schrauben, Klammern) befestigt ist; und bekannte Befestigungsmittel (13) die Wände des Senkkastens (1) mit den Wänden des klassischen Ladekastens (3) verbinden.

9. Vorrichtung gemäß Anspruch 1, dadurch gekennzeichnet, daß die Form des Senkkastens (1) und/oder des Aufsatzes bzw. Zwischenrahmens (2) durch Biegewalzen oder Falzen erreicht wird, und ihnen somit eine vieleckige, gerundete oder kreisförmige Sektion geben.

10. Vorrichtung gemäß Anspruch 1, dadurch gekennzeichnet, daß die Form des Senkkastens (1) und/oder des Aufsatzes bzw. Zwischenrahmens (2) durch Schweißen von verschiedenen Platten, die ihnen ein vieleckiges Volumen geben, erreicht wird.

11. Vorrichtung gemäß Anspruch 1, dadurch gekennzeichnet, daß die oberen Enden des Senkkastens (1) in einem Profil auslaufen, das sich an das am Ende der Seitenwände (5) des klassischen Ladekastens (3) gebildete Winkelprofil (12) anpaßt.

12. Vorrichtung gemäß Anspruch 1, dadurch gekennzeichnet, daß der Senkkasten (1) der besagten Schutzvorrichtung in der Länge über den klassischen Ladekasten (3) übersteht, und dies auf eine Weise, daß die Verstärkung des hinteren Kastenaufbaus und eventuell eine den zu transportierenden Produkten entsprechende Klappe eingebaut werden kann.
